# EUROPÄISCHE PATENTSCHRIFT

(11) **EP 2 395 232 B1**
(45) Veröffentlichungstag und Bekanntmachung des Hinweises auf die Patenterteilung: **02.12.2015**
(21) Anmeldenummer: 09837697.3
(22) Anmeldetag: 30.12.2009
(51) Int. Cl.: F03B 3/00, F03D 3/00

(54) **ORTHOGONALE TURBINE FÜR NIEDRIGE FÖRDERHÖHE**
LOW-HEAD ORTHOGONAL TURBINE
TURBINE ORTHOGONALE BASSE PRESSION

(30) Priorität: 05.02.2009 RU 2009103828
(43) Veröffentlichungstag der Anmeldung: 14.12.2011
(73) Patentinhaber: Joint Stock Company "Scientific Research Institut of Energy Structures" (JSC "NIIES"), Moscow 125362 (RU)
(72) Erfinder: SHPOLIANSKIY, Yuliy Borisovitch, Moscow, 125040 (RU); ISTORIK, Boris Lvovitch, Moscow, 103006 (RU)
(74) Vertreter: Jeck, Anton
(86) Internationale Anmeldenummer: PCT/RU2009/000748
(87) Internationale Veröffentlichungsnummer: WO 2010/080052

(56) Entgegenhaltungen:
- WO-A1-95/18921
- DE-U1- 29 823 019
- GB-A- 2 408 778
- RU-C1- 2 044 155
- RU-C1- 2 307 949
- SU-A1- 1 700 276
- US-A- 3 033 441
- US-A- 4 555 218

## Beschreibung

Die Erfindung betrifft eine orthogonale Niederdruckturbine nach dem Oberbegriff des Anspruchs 1.

Die Erfindung bezieht sich auf die Wind- und Wasserkraftlehre und kann in Flutkraftwerken, Niederdruck-Flusskraftwerken, Wellenkraftwerken, Windkraftwerken mit Windenergiekonzentratoren usw. angewendet werden.

Der Stand der Technik zeigt Niederdruck-Querstrahl-Aktionsturbinen, bei denen die Flügelgeschwindigkeit kleiner als die Druckströmungsgeschwindigkeit ist [1, 2]. Deswegen weisen solche Turbinen größere Abmessungen pro Leistungseinheit auf. Das begrenzt wesentlich ihre Anwendung.

Die orthogonalen Niederdruckturbinen (ähnlich einem H-Darrieus-Rotor mit 4 Flügeln) gehören zu den reaktiven Querstrahlturbinen, die in einem Flüssigkeits- oder Gasstrom innerhalb einer Fließdruckkammer arbeiten. Die kennzeichnende Besonderheit der orthogonalen Turbine besteht darin, dass die an einem Turbinenläufer befestigten Flügel ein flügelartiges Profil aufweisen. Wenn der Mediumstrom dieses Flügelprofil umströmt, entsteht eine Auftriebskraft. Ihre Projektion (Tangentialkomponente) auf den Kreisbewegungssinn des Flügels erzeugt eine Schubkraft des Flügels. Dabei überschreitet die Flügelgeschwindigkeit im Betriebszustand die Geschwindigkeit ihrer Anströmgeschwindigkeit mehrfach. Diese Besonderheit macht die Anwendung von orthogonalen Turbinen in Niederdruckströmungen sinnvoll. Eine weitere Eigenschaft dieser Turbinen ist, dass die Flügel während ihrer Kreisbewegung durch einen in der Fließkammer gebildeten Mediumstrom im Ausgleichszustand mit zweifacher Sinnänderung bei Flügelprofilumströmung pro jede Läuferumdrehung umströmt werden. Diese Eigenschaft bewirkt, dass der Nutzeffekt der orthogonalen Turbine nicht nur durch den Aufbau des Läufers und der Flügel sondern auch maßgeblich durch die Gestaltung der Fließkammer bestimmt ist. Dabei spielt der Abstand ö zwischen der Oberfläche des durch die Turbinenflügel abgetasteten (umspülten) Zylinders und der Oberfläche der Fließkammer eine große Rolle. Dieser Abstand ö soll in orthogonalen Turbinen 10- bis 20-mal größer ausgebildet sein, als es bei Axialturbinen der Fall ist, um Wasser- oder Druckstöße zu vermeiden.

Aus dem Stand der Technik ist eine orthogonale Querstrahlturbine bekannt. Sie weist einen Läufer mit Flügeln auf. Der Läufer ist quer zur Fließkammer mit Zu- und Ableitöffnungen versehen. Die Fließkammer weist in den senkrecht zur Läuferachse liegenden Querschnitten eine geradlinige Verjüngung zum Läufer auf, und zwar so, dass die Fließkammer in der Nähe des Läufers kleiner als sein Durchmesser *D* ist. Die Fließkammer erweitert sich im Läuferumdrehungsbereich gemäß einem Kreisbogen mit einem Durchmesser, der den Durchmesser D um die Abstandsgröße ö [3] überschreitet.

Der Mangel der bekannten Lösung [3] ist ein niedriger Wirkungsgrad der orthogonalen Turbine. Kanadische Forscher haben ein Modell einer orthogonalen Turbine mit ähnlicher Fließkammer geprüft und festgestellt, dass der maximale Wirkungsgrad dabei 0,37 beträgt [4].

Die Prototyp-Turbine ist eine orthogonale Turbine mit einem Läufer mit Flügeln und mit einer quer dazu eingebauten Fließkammer. Die Fließkammer ist wenigstens mit einem Quervorsprung versehen. Die Oberkante des Quervorsprungs grenzt mit einem Abstand an die Oberfläche des mit Flügeln umschriebenen Zylinders an. Dabei ist die Oberkante des Quervorsprungs in einem zur Läuferachse senkrecht liegenden Querschnitt in Bezug auf die Querachse der Fließkammer mittels Umwendung um einen spitzen Mittelpunktwinkel versetzt [5]. Eine ähnliche Lösung ist in dem Stand der Technik [6] beschrieben. Diese Lösung wurde in einigen Versuchs-Industrieanlagen eingesetzt. Die leistungsstärkste davon hat eine senkrechte orthogonale Turbine mit 5 m großem Durchmesser und wird zur Zeit in einer Schwimmeinheit "Kleines Mesener Flutkraftwerk" betrieben, die an die freie Wasserleitung des Gezeitenkraftwerks Kislaja Guba angeschlossen ist [7].

Die Prototyp-Turbine ist eine verbesserte Ausführung. Ihre Naturprüfungen wurden 2007 durchgeführt. Dabei ist ein größerer Wirkungsgrad der Turbine von 0,64 erreicht worden. Diese Größenordnung des Wirkungsgrads macht den Einsatz von orthogonalen Turbinen in Gezeitenkraftwerken wirtschaftlich sinnvoll und ist gegenüber den vollkommenen jedoch mit mehr teueren Axial-Kaplan-Turbinen versehenen gekapselten Aggregaten bevorzugt [8].

Der Mangel des Prototyps ist wie folgt:
Die leistungsstarken Leerlaufstrahlen werden unter der Wirkung des Differenzdrucks zwischen der Eintritts- und Austrittsöffnung der Fließkammer innerhalb des Abstands δ gebildet. Diese Leerlaufstrahlen fließen an den Turbinenflügeln vorbei und leisten keine Nutzarbeit. Die Leerlaufstrahlen bringen einen Teil der Energie der Strömung fort. Diese Strömung wird der Turbine zugeführt, fließt über ihre Fließkammer und vermindert somit den Wirkungsgrad der Turbine. Die Verminderung des Abstands ö setzt auch die relative Leistungsstärke der Leerlaufstrahlen herab. Jedoch darf dieser Abstand nicht klein gemacht werden, wenn man nur von Auslegungsgründen im Zusammenhang mit der Fertigungsgenauigkeit der Turbine ausgeht, wie es bei Axialturbinen der Fall ist. Mit der Verminderung des Abstands δ bis zu einer auslegungsmäßig zulässigen Größe entstehen lokale Hochdruckbereiche in der orthogonalen Turbine. Solche lokalen Hochdruckbereiche verursachen hydraulische Stöße, wenn die Flügel über die Quervorsprünge der Fließkammer laufen. Dabei entsteht ein starkes strömungsdynamisches Geräusch, die Flügelbelastungen nehmen akut zu, und der Wirkungsgrad der Turbine geht zurück. Die hydraulischen Stöße erzeugen eine zerstörende Belastung der Flügel. Um diesen Druckstößen vorzubeugen, sollte der Abstand δ 0,02 - 0,04 vom Durchmesser D der orthogonalen Turbine betragen. Dies ist um das 10- bis 20-fache größer als bei Axialturbinen.

Der Prototyp hat Quervorsprünge an den Wänden der Fließkammer. Die Quervorsprünge lenken die wandnahe Strömung so ab, dass diese nicht direkt in den Abstand δ gerät. Das verbessert die Verteilung der Gesamtströmungsleistung zwischen den Arbeits- und Leerlaufstrahlen und erhöht somit den Wirkungsgrad der Turbine. Jedoch werden die Möglichkeiten im Zusammenhang mit einer Ablenkung der wandnahen Strömung und folglich mit entsprechender Wirkungsgradsteigerung der orthogonalen Turbine im Prototyp nicht völlig benutzt.

Es ist Aufgabe der Erfindung, den Wirkungsgrad der Turbine durch eine weitere Senkung des Leistungsverhältnisses der Leerlaufstrahlen in der Fließkammer der orthogonalen Turbine zu steigern.

Die gestellte Aufgabe wird durch die Merkmale des Anspruchs 1 gelöst.

Die orthogonale Niederdruckturbine weist einen Läufer mit Flügeln auf. Der Läufer ist quer zur Fließkammer eingebaut. Die Fließkammer hat wenigstens einen Quervorsprung. Die obere Kante des Quervorsprungs grenzt mit Abstand an die Oberfläche des von den Flügeln umschriebenen Zylinders an. Dabei ist die obere Kante des Quervorsprungs mit dem zur Läuferachse senkrecht liegenden Querschnitt in Bezug auf die Querachse der Fließkammer versetzt, und zwar mittels einer Drehung um einen spitzen Mittelpunktswinkel in Läuferdrehrichtung. Die der Zuführungsöffnung der Fließkammer zugewandte Seitenkante des Quervorsprungs in dem zur Läuferachse senkrecht liegenden Querschnitt ist konkav ausgebildet. Wenigstens eine Tangente zu dieser Seitenkante bildet einen spitzen Winkel zu einem Abschnitt der Geraden in Richtung der Zuführungsöffnung der Fließkammer. Dieser Abschnitt verbindet den Berührungspunkt mit der Läuferachse.

Die Erfindung hat Ausgestaltungen, welche in Einzelfällen angewendet werden können. Solche Ausgestaltungen umfassen Folgendes:
- Der Abschnitt der Geraden, welcher die Läuferachse mit einem beliebigen Punkt an der oberen Seitenkante des Quervorsprungs verbindet, bildet in dem zur Läuferachse senkrecht liegenden Querschnitt einen spitzen Winkel mit der Querachse der Fließkammer in der Drehrichtung des Läufers aus.
- Die Fließkammer in dem zur Läuferachse senkrecht liegenden Querschnitt ist so ausgebildet, dass eine Zentralsymmetrie zur Läuferachse eingehalten ist.
- Wenigstens ein Strahlleitelement ist in der Fließkammer vor der der Zuführungsöffnung der Fließkammer zugewandten Seitenkante des Quervorsprungs eingebaut.
- Auf dem Läufer ist eine Strömungshaube aufgebaut, die um die Läuferachse drehbar und im Mediumstrom selbsteinstellbar ist.
- Die Oberkante des Quervorsprungs ist durch eine Überschneidung seiner Seitenkanten oder durch eine dem Läufer koaxiale zylinderförmige Schnittfläche ausgebildet, die die Seitenkanten des Quervorsprungs durchkreuzt;
- Die Flügel sind geradlinig mit einem über die Länge konstanten Flügelprofil ausgebildet und auf dem Läufer gleichläufig mit seiner Achse mit Hilfe von Scheiben oder Tragarmen in Stromlinienform befestigt.
- Die Stirnflächen der Flügel werden durch Scheiben oder Ringe festgehalten.

Die Erfindung wird anhand der Zeichnungen näher erläutert. Es zeigen:
- Fig. 1: das Ausführungsbeispiel einer vorgeschlagenen Turbine zum Einsatz in einem Gleichmediumstrom (er ist zum Beispiel für Flusskraftwerke oder Windkraftwerke mit einer bestimmten vorherrschenden Windrichtung kennzeichnend).
- Fig. 2: ein Ausführungsbeispiel der vorgeschlagenen Turbine zum Einsatz in einem Mediumstrom, welcher seine Richtung ab und zu wechselt (das ist zum Beispiel für Flutkraftwerke oder Windkraftwerke typisch), und
- Fig. 3, 4 und 5: Raumbilder möglicher Ausgestaltungen des Läuferaufbaus der orthogonalen Turbine.

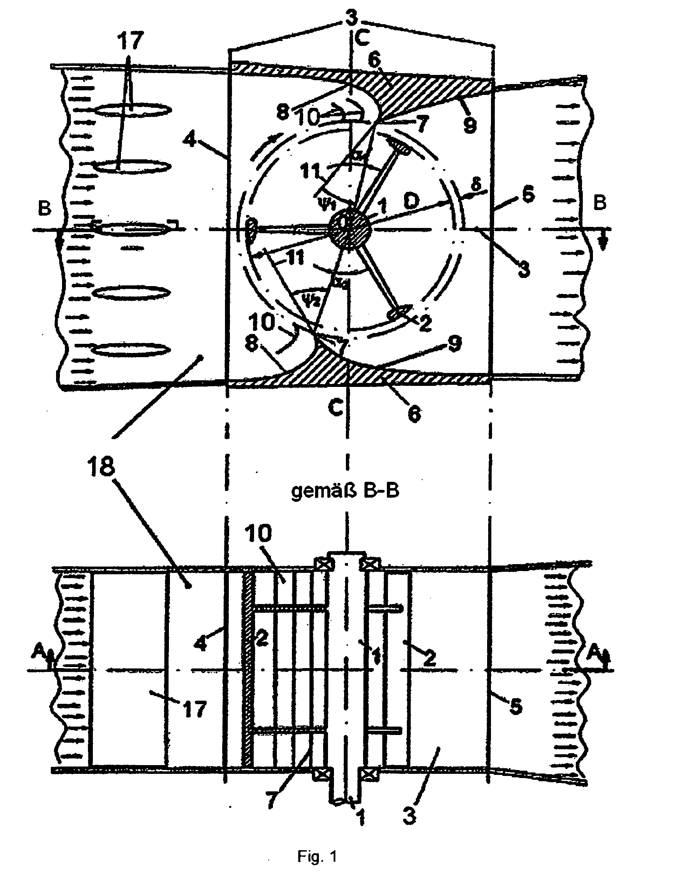

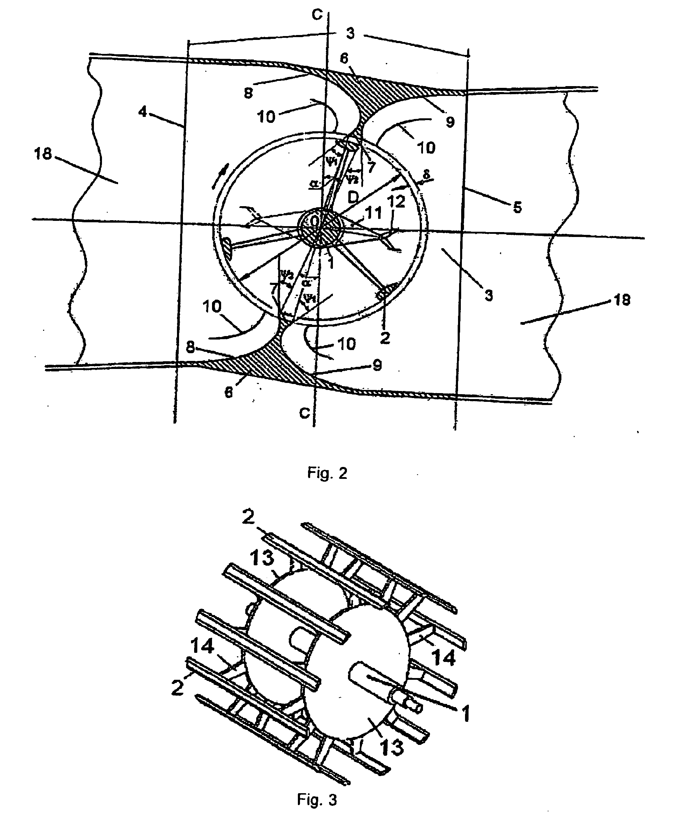

Die orthogonale Niederdruckturbine (s. Fig. 1 und 2) weist einen Läufer 1 mit Flügeln 2 mit einem flügelförmigen Profil und einer Fließkammer 3 auf. Der Läufer 1 ist quer zur Fließkammer 3 drehbar gelagert. Bei einem solchen Einbau des Läufers 1 liegt seine Achse quer zur Arbeitsmediumströmung. Das Arbeitsmedium fließt über Stirnflächenöffnungen 4 und 5 in die Kammer 3. Die Arbeitsmediumströmung dreht den Läufer 1. Die Arbeitsmediumströmung kann eine Flüssigkeits- oder Gasströmung, z. B. Wasser oder Luft, sein. Fig. 1 und 2 zeigen einen Einzelfall einer Ausführung der Erfindung: Je ein Quervorsprung 6 ist an beiden gegenüberliegenden Wänden der Fließkammer 3 ausgebildet. Der Quervorsprung 6 weist eine obere Kante 7 und Seitenkanten 8 und 9 auf. Die Oberkante 7 des Quervorsprungs 6 grenzt mit einem Abstand δ an die Oberfläche des Zylinders mit dem Durchmesser *D* an. Der Zylinder ist von den Flügeln 2 bei der Umdrehung des Läufers 1 umschrieben.

Die Turbinequerschnitte nach Fig. 1 und 2 sind senkrecht zur Achse des Läufers 1 angeordnet. Die Achse des Läufers 1 ist in diesen Querschnitten mit dem Punkt O gekennzeichnet. Die Achse des Läufers 1 der Fließkammer 3 verläuft über den Punkt O und senkrecht zu den Ebenen der Stirnflächenöffnungen 4 und 5. Die zur Achse des Läufers 1 orthogonal liegende Querachse C - C der Fließkammer 3 verläuft ebenfalls über den Punkt O. Die Seitenkanten 8 der Quervorsprünge 6 sind der Stirnflächenöffnung 4 und die Seitenkanten 9 der Stirnflächenöffnung 5 der Fließkammer 3 zugewendet.

In einer für den Einsatz in einem Gleichmediumstrom konzipierten Turbine (s. Fig. 1) ist die Stirnflächenöffnung 4 für eine Strömungszuführung an den Läufer 1 vorgesehen und fungiert als Zuführungsöffnung. Die dieser Stirnflächenöffnung 4 zugewandten Seitenkanten 8 der Quervorsprünge 6 sind im abgebildeten Querschnitt konkav ausgebildet.

In der für einen Einsatz in einem Wechselmediumstrom konzipierten Turbine (s. Fig. 2) ist jede der Stirnflächenöffnungen 4 und 5 für eine Zuführung der Mediumströmung mit entsprechender Richtung zum Läufer 1 vorgesehen. Folglich sind beide Stirnflächenöffnungen 4 und 5 Zuführungsöffnungen. In diesem Fall sind die der Zuführungsöffnung 4 zugewandten Seitenkanten 8 und die der Zuführungsöffnung 5 zugewandten Seitenkanten 9 im abgebildeten Querschnitt konkav ausgebildet.

Aus den Fig. 1 und 2 ist es auch ersichtlich, dass der abgebildete Querschnitt in seiner konkaven Kante (Seitenkante 8 der Fig. 1 und Seitenkanten 8 und 9 der Fig. 2) des Quervorsprungs 6 einen Punkt enthält, in dem die Tangente zur Seitenkante einen spitzen Winkel ψ₁ oder ψ₂ in Richtung der entsprechenden Zuführungsöffnung 4 bzw. 5 der Fließkammer 3 bildet. Der Winkel wird dabei mit einem Abschnitt einer Geraden gebildet, welche ihren Berührungspunkt mit der Achse des Läufers 1 verbindet.

Der Abschnitt der Geraden im abgebildeten Querschnitt ist D/2+δ lang und verbindet die Achse O des Läufers 1 mit dem Punkt auf der Oberkante 7 des Quervorsprungs 6. Gemäß den Fig. 1 und 2 bildet dieser Abschnitt einen spitzen Winkel (α₁ oder α₂ in Fig. 1 und α in Fig. 2) mit der Querachse C - C der Fließkammer 3 in Drehrichtung des Läufers 1. Der Läufer 1 dreht zur stumpfen Nase des flügelförmigen Profils des Flügels 2 um. Die Drehrichtung des Läufers 1 der orthogonalen Turbine ist von der Mediumstromrichtung unabhängig und in Fig. 1 und Fig. 2 mit einem Pfeil angegeben.

Die Fig. 1 zeigt den Einzelfall einer Ausführung der Erfindung. Hier ist die Oberkante 7 des Quervorsprungs 6 durch die Überschneidungslinie seiner Seitenkanten 8 und 9 ausgebildet. In Fig. 2 ist ein anderer Einzelfall dargestellt, bei dem die Oberkante 7 des Quervorsprungs 6 durch eine mit dem Läufer 1 koaxiale zylinderförmige Schnittfläche gebildet ist. Diese Schnittfläche durchkreuzt die Seitenkanten 8 und 9. Im letzten Fall weisen die Quervorsprünge 6 im abgebildeten Querschnitt die Form eines Stiefelabsatzes auf.

In manchen Ausgestaltungen der Erfindung können die in Fig. 1 abgebildeten Winkel α₁ oder α₂ zur Achse ungleich sein. Dabei kann (nur) einer der Winkel (α₁ oder α₂) negativ sein. Das heißt, einer der Quervorsprünge 6 kann in Bezug auf die Querachse der Fließkammer 3 gemäß der Kreislinie mit einem Durchmesser D+2δ versetzt sein, und zwar in Gegenrichtung der Läuferumdrehung.

In der in Fig. 2 dargestellten Turbine sind die Quervorsprünge 6 an den gegenüberliegen Wänden der Turbinekammer im abgebildeten Querschnitt unter Einhaltung einer Zentralsymmetrie zur Läuferachse (Punkt O) ausgebildet. In diesem Fall ist der Winkel α für beide Quervorsprünge 6 in einem Querschnitt der Fließkammer 3 gleich.

Es sei bemerkt, dass die Winkel α, α₁ oder α₂ in verschiedenen zur Achse des Läufers 1 senkrecht liegenden Querschnitten der Fließkammer 3 unterschiedlich sein können. Dabei kann die Oberkante 7 des Quervorsprungs 6 nicht parallel zur Achse des Läufers 1 liegen, sondern eine Kurve oder eine gebrochene Linie auf der Oberfläche des Zylinders mit einem Durchmesser D + 2δ darstellen. Dadurch kann ein allmählicher Durchgang der Flügel 2 über die Oberkante 7 des Quervorsprungs 6 bei einem relativ kleinen Abstand δ erreicht werden, um einen hydraulischen Stoß zu vermeiden.

In Fig. 1 und 2 sind auch die neben den konkaven Seitenkanten 8 und 9 der Quervorsprünge 6 eingebauten Strahlleitelemente (Deflektoren) 10 abgebildet. Fig. 1 zeigt zwei Deflektoren 10 am oberen Quervorsprung 6 und einen Deflektor 10 am unteren Quervorsprung 6. Fig. 2 zeigt zwei Deflektoren 10 (je einen an jeder Seite des Quervorsprungs 6), die unter Beachtung einer Zentralsymmetrie aufgebaut sind. Zwischen den konkaven Seitenkanten des Quervorsprungs 6 und dem nächsten Deflektor 10 (s. Fig. 1 und 2) sowie zwischen zwei Nachbardeflektoren 10 am oberen Quervorsprung 6 (s. Fig.1) entstehen Strahlenkanäle, welche den Strahleneffekt der konkaven Seitenkanten 8 und 9 des Quervorsprungs 6 verstärken.

In Fig. 2 ist auch eine Strömungshaube 11 mit einem Schwanzleitwerk 12 abgebildet. Die im Mediumstrom selbsteinstellende Strömungshaube 11 ist auf dem Läufer 1 gelagert (z. B. gleitgelagert, in Fig. 2 nicht abgebildet). Die Lage der Strömungshaube 11 ist bei der Flüssigkeitsströmung von links nach rechts mit einer Volllinie und die Lage der Strömungshaube 11 bei Gegenströmung mit einer Strichlinie angegeben. Die Strömungshaube 11 vermindert die Druckhöhenverluste, wenn der Mediumstrom die Läuferwelle umströmt. Das erhöht zusätzlich den Wirkungsgrad der Turbine.

Die Fig. 3, 4 und 5 zeigen Beispiele von einfachen und fertigungsgerechten Ausführungen des Läufers 1 mit zwölf geradlinigen Flügeln 2. Die Flügel 2 weisen ein längenmäßig konstantes flügelförmiges Profil auf und sind parallel auf der Achse des Läufers 1 befestigt.

In Fig. 3 ist ein Beispiel der Befestigung der Flügel 2 auf dem Läufer 1 mit Hilfe von zwei Scheiben 13 und Radialtragarmen (Speichen) 14 in Stromlinienform dargestellt.

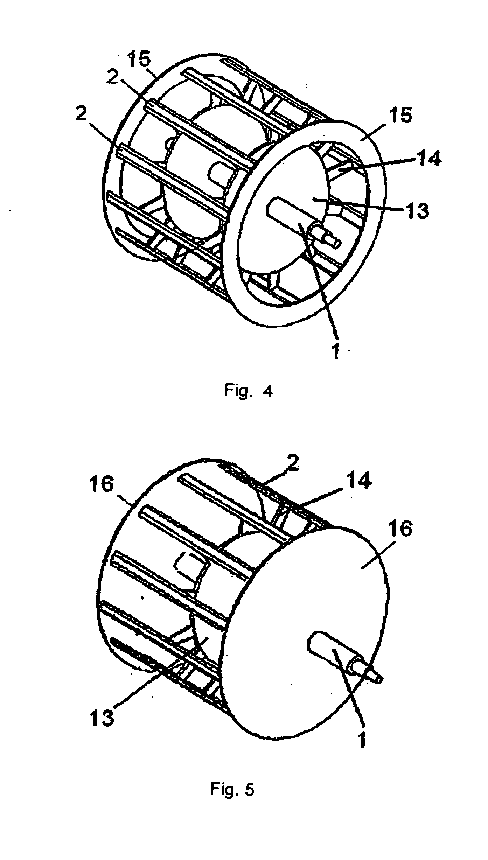

Die Fig. 4 und 5 zeigen Beispiele des Läufers 1 ähnlich wie in Fig. 3, wo die Stirnflächen der Flügel 2 mittels Ringen 15 (Fig. 4) oder Scheiben 16 (Fig. 5) befestigt sind. Die Funktionsweise der vorgeschlagenen Turbine wird am Beispiel ihrer Anwendung in einem Wasserstrom beschrieben.

Ein Jalousieverschluss 17 ist zum Beispiel in einer Zuführungs-Wasserdruckleitung 18 (s. Fig. 1, Jalousieverschluss ist in Fig. 2 nicht abgebildet) eingebaut. Liegt am Jalousieverschluss 17 ein minimaler Druck an, so geht der Jalousieverschluss 17 auf (die Jalousien drehen sich und nehmen die in Fig. 1 dargestellte Lage ein). Die über die Fließkammer 3 fließende Strömung ist quer zur Achse des Läufers 1 und quer zum Flügel 2 gerichtet. Die Tangentialkomponente der auf den Flügel 2 wirkenden Auftriebskraft ist tangential zur Kreislinie mit einem Durchmesser *D* gerichtet. Diese Kreislinie wird durch die Flügel 2 des Läufers 1 umschrieben.

Für manche Flügel 2 wirkt diese Kraft in beliebiger Lage des Läufers 1 als Schubkraft und für manche Flügel 2 als Bremskraft, d. h. sie verhindert die Bewegung der Flügel 2 in Richtung der stumpfen Nase. Jedoch ist das Gesamtmoment der Schubkraft aller Flügel 2 für den unbeweglichen Läufer 1 zur stumpfen Nase des Profils des Flügels 2 ausgerichtet. Wenn die Bremse des Läufers 1 gelöst wird, fängt er an, sich zu drehen und beschleunigt sich. Mit einer Drehzahlsteigerung des Läufers 1 und einer Geschwindigkeitserhöhung der Flügel 2 nehmen das Schubkraftmoment und die Beschleunigungsintensität des Läufers 1 gemäß der Kreislinienlaufbahn zuerst langsam und dann schnell zu. Ist eine bestimmte Drehzahl erreicht, so schaltet sich die Nutzlast zu, zum Beispiel indem ein Generator an das Stromversorgungsnetz angeschlossen wird. Die Welle des Generators ist mit dem Läufer 1 gekoppelt. Der Läufer 1 beendet seine Beschleunigung und wechselt zu einem Betriebszustand einer Umdrehung.

Die oben beschriebene Form der Quervorsprünge 6 mit der beschriebenen konkaven Seitenfläche, die der Zuführungs-Stirnflächen-Öffnung 4 der Fließkammer 3 zugewandt ist, ermöglicht es, mit Hilfe eines variierten Kennwerts ψ den Anströmungswinkel des Flügels 2 zu optimieren, um das Drehmoment des Läufers 1 zu erhöhen und die positive Richtung der Schubkraft seiner Flügel 2 praktisch über die gesamte Kreislaufbahn ihrer Bewegung aufrechtzuerhalten. Die Ausnahme davon sind nur die kurzen Laufbahnabschnitte an den Oberkanten 7 der Quervorsprünge 6. Hier kommt ein schneller Richtungswechsel des umlaufenden Stroms rings um den Flügel 2 herum zustande. Seine Schubkraft passiert den Nullwert.

Die Ausrichtung zur eintretenden Strömung hin tangential zur Seitenfläche des Quervorsprungs 6 in der Nähe der Oberkante 7 trägt zur Umverteilung der Strömungsleistung von den Leerlaufstrahlen zu den Arbeitsstrahlen bei. Die Arbeitsstrahlen umströmen die Turbinenflügel. Das fördert dementsprechend die Steigerung des Wirkungsgrads der Turbine.

Der Wasserdruck fällt bei einem Flutkraftwerk beim Richtungswechsel der Flutwelle bis Null ab. Wird die Turbine in diesem Fall gestoppt, so kann die Turbine erst dann wieder in Betrieb genommen werden, wenn der Wasserdruck ein erforderliches Minimum erreicht. Dafür wird der Jalousieverschluss 17 bei Null-Druck und bei fehlender Wasserströmung über die Wasserleitung 18 geschlossen.

Die Anwendung der vorgeschlagenen orthogonalen Turbine in Niederdruck-Flusskraftwerken und in Flutkraftwerken kann einen beachtlichen wirtschaftlichen Effekt ergeben. Die Erhöhung des Wirkungsgrads der orthogonalen Turbine dank der vorgeschlagenen technischen Lösung wird anhand der Ergebnisse von durchgeführten Berechnungen auf wenigstens 5 % geschätzt. Das ergibt für die dem Mesener Gezeitenkraftwerk ähnlichen Anlagen mit einer installierten Leistung von 8000 MW eine Stromerzeugungssteigerung um ca. 2 Milliarden Kilowattstunden pro Jahr gegenüber dem Prototyp.

### Stand der Technik

[1] US 3033441A (1962-05-08).
[2] GB 2408778A (2005-06-08).
[3] Lyakhter V. M. Gesamtheit der Gezeitenkraftwerkanlagen zur Sicherstellung des vorgegebenen Plans der Leistungsförderung. Wasserbau, 1998, No. 12, S. 48, Abb. 8.
[4] Fahre T.D., Pratte B. D. and Swan D. The Darrieus Hydraulic Turbine - Mode and Field Experiment. Fourth International Symposium on Hydro Power Fluid Machinery. Anaheim, California, December, 1986. American Society of Mechanical Engineers.
[5] RU2044155 C1 (1995-09-20)
[6] WO 95/18921A1 (1995-07-13).
[7] Usachev I.N., Shpolyanski Yu.B., Istorik B. L., Pastukhov V. P., Kondratov Yu.V., Borodin V. V., Savchenkov S. N., Kushnerik V. I. Errichtung von schwimmender Typen-Energieeinheit für Gezeitenkraftwerke. Wasserbau, 2007, Heft 9, S. 2 - 8.
[8] Istorik B. L., Prudovsky A. M., Usachev I. N., Shpolyansky Yu.B. Einsatz der orthogonalen Turbine in Gezeitenkraftwerken. Wasserbau, 1988, Heft 12, S. 35.

## Patentansprüche

1. Orthogonale Niederdruckturbine mit einem Läufer (1) mit Flügeln (2) mit einem flügelförmigen Profil, wobei der Läufer (1) quer zur Fließkammer (3) eingebaut ist, wobei die Fließkammer (3) wenigstens einen Quervorsprung (6) aufweist, wobei die Oberkante (7) des Quervorsprungs (6) mit Abstand an die Oberfläche des von den Flügeln (2) umschriebenen Zylinders angrenzt, wobei die obere Kante (7) des Quervorsprungs (6) mit dem zur Läuferachse (O) senkrecht liegenden Querschnitt in Bezug auf die Querachse (C - C) der Fließkammer (3) versetzt ist und zwar mittels einer Drehung um einen spitzen Mittelpunktwinkel (ψ₁, ψ₂) in Drehrichtung des Läufers (1),
**dadurch gekennzeichnet, dass**:
- die der Zuführungsöffnung (4, 5) der Fließkammer (3) zugewandte Seitenkante (8, 9) des Quervorsprungs (6) in dem zur Achse (O) des Läufers (1) senkrecht liegenden Querschnitt konkav ausgebildet ist, und
- wenigstens eine Tangente zu dieser Seitenkante (8, 9) einen spitzen Winkel (α, α₁, α₂) mit einem Abschnitt einer Geraden in Richtung zur Zuführungsöffnung (4, 5) der Fließkammer (3) bildet, wobei dieser Abschnitt einen Berührungspunkt mit der Achse (O) des Läufers (1) verbindet.

2. Niederdruckturbine nach Anspruch 1,
**dadurch gekennzeichnet,**
**dass** die obere Fläche (7) des Vorsprungs (6) durch die Überschneidung seiner Seitenkanten (8, 9) ausgebildet ist.

3. Niederdruckturbine nach Anspruch 1,
**dadurch gekennzeichnet,**
**dass** die obere Fläche (7) des Vorsprungs (6) durch eine mit dem Läufer (1) konzentrische zylinderförmige Schnittfläche ausgebildet ist, welche die Seitenkanten (8, 9) des Vorsprungs (6) kreuzt.

4. Niederdruckturbine nach Anspruch 3,
**dadurch gekennzeichnet,**
**dass** die Fließkammer (3) mit einem zur Achse (O) des Läufers (1) senkrecht liegenden Querschnitt zentralsymmetrisch zur Achse (O) des Läufers (1) ausgebildet ist.

5. Niederdruckturbine nach Anspruch 1,
**dadurch gekennzeichnet,**
**dass** wenigstens ein Strahlleitelement (10) in der Fließkammer (3) vor der der Zuführungsöffnung (4, 5) der Fließkammer (3) zugewandten Seitenkante (8, 9) des Quervorsprungs (6) eingebaut ist.

6. Niederdruckturbine nach Anspruch 1,
**dadurch gekennzeichnet,**
**dass** auf dem Läufer (1) eine Strömungshaube (11) aufgebaut ist, die um die Achse (O) des Läufers (1) drehbar und im Mediumstrom selbsteinstellbar ist.

7. Niederdruckturbine nach Anspruch 1,
**dadurch gekennzeichnet,**
**dass** die Flügel (2) geradlinig mit einem über die Länge konstanten Flügelprofil ausgebildet und auf dem Läufer (1) gleichläufig mit seiner Achse (O) befestigt sind.

8. Niederdruckturbine nach Anspruch 7,
**dadurch gekennzeichnet,**
**dass** die Flügel (2) auf dem Läufer (1) mit Hilfe von Scheiben (13) oder Radialtragarmen (14) in Stromlinienform befestigt sind.

9. Niederdruckturbine nach Anspruch 7,
**dadurch gekennzeichnet,**
**dass** die Stirnflächen der Flügel (2) durch Scheiben (16) oder Ringe (15) festgehalten sind.

## Claims

1. An orthogonal low-pressure turbine with a rotor (1) with blades (2) with a blade-shaped profile, wherein the rotor (1) is installed transversely to the flow chamber (3), wherein the flow chamber (3) has at least one transverse projection (6), wherein the upper edge (7) of the transverse projection (6) at a distance abuts against the surface of the cylinder circumscribed by the blades (2), wherein the upper edge (7) of the transverse projection (6) with the cross-section lying perpendicular to the rotor axis (O) is offset with regard to the transverse axis (C - C) of the flow chamber (3), namely by means of a rotation around an acute central angle (ψ₁,ψ₂) in the rotation direction of the rotor (1), **characterized in that**:
- the side edge (8, 9) of the transverse projection (6) facing the feed opening (4, 5) of the flow chamber (3) is designed concave in the cross-section lying perpendicular to the axis (O) of the rotor (1), and
- at least one tangent to this side edge (8, 9) forms an acute angle (α, α₁, α₂) with a section of a straight line in the direction to the feed opening (4, 5) of the flow chamber (3), wherein this section connects the point of contact with the axis (O) of the rotor (1).

2. A low-pressure turbine according to claim 1,
**characterized in**
**that** the upper surface area (7) of the projection (6) is formed by the overlapping of its side edges (8, 9).

3. A low-pressure turbine according to claim 1,
**characterized in**
**that** the upper surface area (7) of the projection (6) is formed by a cylindrical cut surface concentric with the rotor (1), which crosses the side edges (8, 9) of the projection (6).

4. A low-pressure turbine according to claim 3,
**characterized in**
**that** the flow chamber (3) with a cross-section lying perpendicular to the axis (O) of the rotor (1) is formed centrally symmetrical to the axis (O) of the rotor (1).

5. A low-pressure turbine according to claim 1,
**characterized in**
**that** at least one jet guiding element (10) is installed in the flow chamber (3) in front of the side edges (8, 9) of the transverse projection (6) facing the feed opening (4, 5) of the flow chamber (3).

6. A low-pressure turbine according to claim 1,
**characterized in**
**that** a flow hood (11) is constructed on the rotor (1), which can be rotated about the axis (O) of the rotor (1) and is self-adjustable in the medium flow.

7. A low-pressure turbine according to claim 1,
**characterized in**
**that** the blades (2) are designed straight with a blade profile constant along the length and are mounted on the rotor (1) co-rotating with its axis (O).

8. A low-pressure turbine according to claim 7,
**characterized in**
**that** the blades (2) on the rotor (1) are mounted with the aid of disks (13) or radial supporting arms (14) in a streamlined shape.

9. A low-pressure turbine according to claim 7,
**characterized in**
**that** the front surfaces of the blades(2) are held by disks (16) or rings (15).

## Revendications

1. Turbine basse pression orthogonale avec un rotor (1) avec des pales (2) ayant un profil en forme d'aile, le rotor (1) étant monté transversalement par rapport à la chambre d'écoulement (3), la chambre d'écoulement (3) comprenant au moins une saillie transversale (6), le bord supérieur (7) de la saillie transversale (6) étant adjacent, avec une certaine distance, à la surface du cylindre définie par les pales (2), le bord supérieur (7) de la saillie transversale (6) étant décalé, avec la section transversale perpendiculaire à l'axe du rotor (O), par rapport à l'axe transversal (C - C) de la chambre d'écoulement (3) au moyen d'une rotation d'un angle central aigu (ψ₁, ψ₂) dans le sens de rotation du rotor (1),
**caractérisée en ce que**
- le bord latéral (8, 9) de la saillie transversale (6), orientée vers l'ouverture d'alimentation (4, 5) de la chambre d'écoulement (3) est de forme concave dans la section transversale perpendiculaire à l'axe (O) du rotor (1) et
- au moins une tangente à ce bord latéral (8, 9) formant un angle aigu (α, α1, α2) avec une portion de droite en direction de l'ouverture d'alimentation (4, 5) de la chambre d'écoulement (3), cette portion reliant un point de contact avec l'axe (O) du rotor (1).

2. Turbine basse pression selon la revendication 1
**caractérisée en ce que**
la surface supérieure (7) de la saillie (6) est formée par l'intersection entre ses bords latéraux (8, 9).

3. Turbine basse pression selon la revendication 1
**caractérisée en ce que**
la surface supérieure (7) de la saillie (6) est constituée d'une surface d'intersection cylindrique concentrique par rapport au rotor (1) qui croise les bords latéraux (8, 9) de la saillie (6).

4. Turbine basse pression selon la revendication 3
**caractérisée en ce que**
la chambre d'écoulement (3) est conçue avec une section transversale perpendiculaire à l'axe (O) du rotor (1), avec une symétrie centrale par rapport à l'axe (O) du rotor (1).

5. Turbine basse pression selon la revendication 1
**caractérisée en ce que**
au moins un élément de guidage de jet (10) est intégré dans la chambre d'écoulement (3) avant le bord latéral (8, 9) de la saillie transversale (6) orienté vers l'ouverture d'alimentation (4, 5) de la chambre d'écoulement (3).

6. Turbine basse pression selon la revendication 1
**caractérisée en ce que**
sur le rotor (1), un capot d'écoulement (11) est monté, qui est rotatif autour de l'axe (O) du rotor (1) et réglable automatiquement dans l'écoulement de fluide.

7. Turbine basse pression selon la revendication 1
**caractérisée en ce que**
les pales (2) sont droites avec un profil constant sur la longueur et sont fixées sur le rotor (1) dans le même sens que son axe (O).

8. Turbine basse pression selon la revendication 7
**caractérisée en ce que**
les pales (2) sont fixées sur le rotor (1) à l'aide de disques (13) ou de bras de support radiaux (14) dans la forme du profil.

9. Turbine basse pression selon la revendication 7
**caractérisée en ce que**
les faces frontales des pales (2) sont maintenues par des disques (16) ou des bagues (15).
